(19) 

**Europäisches Patentamt**

**European Patent Office**

**Office européen des brevets**

(11) **EP 2 432 578 B1**

(12) **EUROPEAN PATENT SPECIFICATION**

(45) Date of publication and mention
of the grant of the patent:
**12.09.2018 Bulletin 2018/37**

(51) Int Cl.:
**B01D 69/14** *(2006.01)*     **B01D 67/00** *(2006.01)*
**B01D 61/36** *(2006.01)*

(21) Application number: **10723551.7**

(22) Date of filing: **18.05.2010**

(86) International application number:
**PCT/EP2010/056791**

(87) International publication number:
**WO 2010/145901 (23.12.2010 Gazette 2010/51)**

(54) **THIN FILM PERVAPORATION MEMBRANES**

DÜNNSCHICHT-PERVAPORATIONSMEMBRANEN

MEMBRANES DE PERVAPORATION SUR FILM MINCE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **18.05.2009 PCT/EP2009/056006**

(43) Date of publication of application:
**28.03.2012 Bulletin 2012/13**

(73) Proprietor: **VITO NV
2400 Mol (BE)**

(72) Inventors:
- **VANDEZANDE, Pieter
 B-2200 Herentals (BE)**
- **CLAES, Stan, Vic, Valerie
 B-3590 Diepenbeek (BE)**
- **MULLENS, Steven, Hans, Rik, Wouter
 B-3500 Hasselt (BE)**

(74) Representative: **Pronovem
Office Van Malderen
Avenue Josse Goffin 158
1082 Bruxelles (BE)**

(56) References cited:
**WO-A1-2009/027376     US-A1- 2007 137 477
US-B1- 6 316 684**

- **DE SITTER K ET AL: "Silica filled
 poly(1-trimethylsilyl-1-propyne) nanocomposite
 membranes: Relation between the transport of
 gases and structural characteristics" JOURNAL
 OF MEMBRANE SCIENCE, ELSEVIER
 SCIENTIFIC PUBL.COMPANY. AMSTERDAM, NL
 LNKD- DOI:10.1016/J.MEMSCI.2005.10.046, vol.
 278, no. 1-2, 5 July 2006 (2006-07-05), pages 83-91,
 XP024931442 ISSN: 0376-7388 [retrieved on
 2006-07-05] cited in the application**

Remarks:
The file contains technical information submitted after
the application was filed and not included in this
specification

Printed by Jouve, 75001 PARIS (FR)

## Description

### FIELD OF THE INVENTION

The present invention relates to pervaporation membranes comprising a porous support layer upon which a thin coating is applied. More specifically, the present invention provides pervaporation membranes with an improved performance. The present invention further relates to methods for the manufacturing of such pervaporation membranes.

### BACKGROUND OF THE INVENTION

At present organophilic pervaporation (OPV) is a promising separation technique that involves the use of non-porous polymeric membranes, which are brought into contact with a liquid stream containing two or more miscible components of which one or more organic solvents. In contrast to hydrophilic pervaporation, which is for instance applied in solvent dewatering, OPV membranes preferentially remove the organic components from the mixture due to their higher affinity for, and/or quicker sorption in the hydrophobic membrane. The driving force for the transport of components through pervaporation membranes is the chemical potential gradient and more specifically the partial vapour pressure gradient of the components at the feed and permeate side. The mass transport in pervaporation is generally described by the solution-diffusion model, which is based on a three-step transport mechanism consisting of (i) sorption of the permeant from the feed mixture at the upstream side of the membrane, (ii) diffusion of the permeant through the membrane, and (iii) desorption of the permeant at the downstream side of the membrane. The vaporous permeate is subsequently condensed to obtain a liquid product. According to the solution-diffusion mechanism, the pervaporation flux is a function of the solubility in and diffusivity through the membrane. Membrane selectivity is thus affected by the solubility of a compound in the polymer, which is determined by the permeate-membrane interaction, and the diffusivity which is generally governed by the molecular size, shape and mass of the permeant.

The number of commercial OPV membranes that combine a high selectivity with an elevated pervaporation flux, and moreover show long-term stability in organic solvents is however restricted at present. OPV did therefore not yet realize a breakthrough in industrial processes so far, despite its clear environmental and economical advantages and the great application potential in the process industry. Several polymers have been used for the synthesis of OPV membranes, e.g. polydimethylsiloxane (PDMS), polytetrafluoroethylene (PTFE), ethylenepropylene-diene terpolymer (EPDM), polyurethaneurea (PU), poly(ether-block-amide) (PEBA) and poly(1-trimethylsilyl-1-propyne) (PTMSP).

US 6,316,684 provides separation membranes comprising a polymer with particles dispersed therein. In the examples, poly(4-methyl-2-pentyne) (PMP) and poly(1-trimethylsilyl-1-propyne) (PTMSP) membranes are cast on a glass plate.

PTMSP is a substituted polyacetylene that combines a rigid backbone chain with trimethylsilyl side-groups. These bulky groups restrict rotational mobility and limit the polymer's ability to pack together. PTMSP is a hydrophobic glassy polymer (Tg > 300°C) with an extremely high free volume fraction (up to 25%) and it exhibits intrinsic nanoporosity. PTMSP is one of the most studied polymers for gas separation applications. PTMSP-based gas separation membranes have already been disclosed in De Sitter et al. (in "Silica filled poly(1-trimethylsilyl-1-propyne) nanocomposite membranes: relation between the transport of gases and structural characteristics", Journal of Membrane Science vol. 278 (2006), pp. 83-91) wherein a method for preparing a filled polymeric membrane is described. Nonporous PTMSP membranes have also been applied in the pervaporative separation of aqueous alcohol mixtures, and recently also in nanofiltration of alcoholic feed solutions. However, these dense PTMSP membranes generally exhibited low permeate fluxes. WO 2009/027376 provides a PTMSP layer with a thickness of about $30\mu m$ cast upon a porous polyacrylonitrile substrate.

WO 2009/027376 describes a filled polymeric membrane comprising aggregates of nanometre-sized filler particles and a method of manufacturing such membrane comprising a first step of preparing a filler suspension comprising a solvent for a glassy polymer and nanometre-sized particles. The nanometre-sized particles in said filler suspension are aggregated in aggregates having an average aggregate size in the range between 50 nm and smaller than 200 nm. The glassy polymer is added to the filler suspension and dissolved therein to obtain a polymer suspension. The polymer suspension is cast on a substrate, followed by a step of removing the solvent.

Koops et al., Selectivity as a function of membrane thickness: gas separation and pervaporation, Journal of Applied Polymer Science, Vol. 53, 1639-1651 (1994) describes that the pervaporation selectivity decreases with decreasing membrane thickness. The phenomenon is attributed to defects induced during pervaporation. Therefore, at present there is a pressing need for OPV membranes that combine a high alcohol/water selectivity with an elevated pervaporation flux, and moreover show long-term stability in strongly swelling organic solvents.

The present invention aims at providing OPV membranes that combine the required characteristics: a high selectivity, an elevated pervaporation flux and a long-term stability. The present invention also aims to provide methods for manufacturing such membranes. The present invention also aims to provide membrane separation processes having an improved performance over processes of the prior art. Particularly, the present invention aims to provide an improved pervaporation process, in particular for separating alcohols from dilute aqueous mixtures.

## SUMMARY OF THE INVENTION

The present invention provides novel pervaporation membranes as defined in claim 1 comprising a porous support layer upon which a thin coating or film is applied. Said thin coating or film is preferably a coating comprising a, preferably non-porous, glassy substituted polyacetylene material such as PTMSP, preferably filled with nanoparticles such as silica or other non-porous inorganic particles such as metal oxides. The novel pervaporation membranes according to the present invention have been shown to improve membrane separation processes. Particularly, the pervaporation membranes according to the present invention enable to perform solvent/water separations, and in particular allow to separate solvents from dilute aqueous mixtures.

As described in the present invention, the inventors have surprisingly found that by applying an aggregate filled PTMSP coating, with a maximal average thickness of 20 $\mu$m onto a porous support such as a polyacrylonitrile (PAN) or polyvinylidene fluoride (PVDF) membrane, the performance of the resulting pervaporation membranes is improved. The pervaporation membranes of the present invention show a high selectivity in the separation of solvents, particularly alcohols, from water, combined with an elevated pervaporation flux. The porous support, typically an ultrafiltration membrane, provides mechanical stability to the top layer without affecting its selectivity and flux in pervaporation.

The present invention therefore relates to a novel pervaporation membrane provided with an aggregate filled PTMSP coating on a porous support, wherein the average thickness of said coating is at most 20 $\mu$m.

The inventors have found that the application of a coating with an average thickness of at most 20 $\mu$m onto a porous support provides a pervaporation membrane with enhanced properties. The pervaporation membranes of the present invention show a high solvent/water selectivity, combined with an elevated pervaporation flux.

In a particular embodiment, the present invention relates to a pervaporation membrane according to the present invention comprising a polyacrylonitrile (PAN) porous support with a PTMSP-silica coating, wherein the average thickness of said coating ranges between 2 and 20 $\mu$m, and is more particularly less than 17 $\mu$m or even less than 15 $\mu$m.

In a particular embodiment, the present invention relates to a pervaporation membrane according to the present invention comprising a polyvinylidene fluoride (PVDF) porous support with a PTMSP-silica coating, wherein the average thickness of said coating ranges preferably between 0.5 and 20 $\mu$m, and is particularly less than and 15 $\mu$m, 12 $\mu$m, 9 $\mu$m, or even less than 5$\mu$m.

The pervaporation membrane according to the present invention provides an (ethanol/water) pervaporation flux of at least 2.0 kg/(m$^2$.h), and preferably at least 2.1, 2.2, 2.3, 2.4 or 2.5 kg/(m$^2$.h). More preferably the (ethanol/water) pervaporation flux of the pervaporation membranes according to the present invention are at least 2.6, 2.7, 2.8, 2.9, 3.0, 3.1, 3.2, 3.3, 3.4, 3.5, 3.6, 3.7, 3.8, 3.9, 4.0, 4.5, 5.0, 5.5 or 6.0 kg/(m$^2$.h), or more.

The present invention relates further to a method for the manufacturing of a pervaporation membrane as defined in cl.9. According to a particular embodiment, the method comprises the steps of:

(a) coating an aggregate filled PTMSP solution on top of a porous polymeric support; and,
(b) evaporating said aggregate filled PTMSP solution on said porous support for at least 8 hours at a temperature ranging between 20 and 25°C, thereby providing a pervaporation membrane provided with a aggregate filled PTMSP coating onto said porous support. According to another embodiment, the present invention relates to an apparatus for separating a mixture of components by pervaporation or nanofiltration, wherein the apparatus comprises the pervaporation membrane according to the present invention. The pervaporation membranes according to the present invention can find application in apparatuses for separating a mixture of components by pervaporation or nanofiltration. The pervaporation membranes according to the present invention can advantageously be used in processes for separating a mixture of (fluid) components.

The present invention relates further to the use of a pervaporation membrane according to claim 11 in a process of separating a mixture of components by pervaporation. These and further aspects and embodiments are described in the following sections and in the claims.

## BRIEF DESCRIPTION OF FIGURES

**Figure 1** provides a SEM image of a cross-section of a thin film PTMSP pervaporation membrane according to an embodiment of the present invention comprising a thin PTMSP-silica coating applied onto a PVDF porous support layer.

**Figure 2** provides a SEM image of a cross-section of a thin film PTMSP pervaporation membrane according to an embodiment of the present invention comprising a thin PTMSP-silica coating applied onto a PVDF porous support layer. Said PVDF porous support layer is further attached to a polyester fabric support.

**Figure 3** provides a SEM image of a cross-section of a thin film PTMSP pervaporation membrane according to an embodiment of the present invention comprising a thin PTMSP-silica coating applied onto a PAN porous support layer.

## DETAILED DESCRIPTION OF THE INVENTION

Before the present method and devices used in the invention are described, it is to be understood that this invention is not limited to particular methods, components, or devices described, as such methods, components, and devices may, of course, vary. It is also to be understood that the terminology used herein is not intended to be limiting, since the scope of the present invention will be limited only by the appended claims.

Unless defined otherwise, all technical and scientific terms used herein have the same meaning as commonly understood by one of ordinary skill in the art to which this invention belongs. Although any methods and materials similar or equivalent to those described herein may be used in the practice or testing of the present invention, the particular methods and materials are now described.

In this specification and the appended claims, the singular forms "a", "an", and "the" include plural references unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

The terms "comprising", "comprises" and "comprised of" also include the term "consisting of". The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

The recitation of numerical ranges by endpoints includes all numbers and fractions subsumed within the respective ranges, as well as the recited endpoints.

The present invention provides novel pervaporation membranes comprising a porous support layer upon which a thin coating or film is applied. Said thin coating or film is preferably a coating comprising a, preferably non-porous, material in the form of nanoparticles such a silica, other metal oxides and/or aggregates thereof, in combination with a glassy polymer. The nanoparticles are preferably non-porous and preferably have a high specific surface area. The nanoparticles can be treated or coated, e.g. to make them hydrophobic. The glassy polymer refers to a polymer having a glass transition temperature above the temperature at which the polymer will be used. The glassy polymers used for the present invention have a glass transition temperature of at least 100°C. The glassy polymers preferably have a high free volume, meaning a fractional free volume of at least 0.20. Possible glassy polymers envisaged by the invention are substituted polyacetylene polymers, such as, but not limited to, PTMSP, PTBA (poly(tert-butylacetylene)), PPP (poly(1-phenyl-1-propyne)), PTMSDPA (poly[1-phenyl-2-[p-(trimethylsilyl)phenyl]acetylene]), PTMGP (poly(1-trimethylgermyl-1-propyne)) and/or PMP (poly(4-methyl-2-pentyne)). Preferably the glassy polymers used in the pervaporation membranes according to the present invention are substituted polyacetylene polymers and more preferably PTMSP.

According to the present invention membranes are provided wherein a coating of a glassy polymer is applied onto a porous support which can in turn be supported by a woven or non-woven substrate backing. The porous supports according to the invention include, but are not limited to polyimide (PI), polyetherimide (PEI), polyamide (PA), poly(amide hydrazide) (PAH), polysulfone (PSf), polyethersulfone (PES), polyphenylsulfone (PPSf), polyphenylene sulfide sulfone (PPSS), poly (ether ether ketone), poly(phthalazinone ether sulfone ketone) (PPESK), cellulose acetate (CA), polybenzimidazole (PBI), polyacrylonitrile (PAN) or polyvinylidene fluoride (PVDF) membranes, and preferably polyacrylonitrile (PAN) or polyvinylidene fluoride (PVDF) membranes.

Alternatively ceramic supports may be used as porous support in the pervaporation membranes according to the present invention. The pervaporation membranes of the present invention show a high selectivity, combined with an elevated pervaporation flux. By providing an additional support, typically an ultrafiltration membrane, upon which a thin selective top layer is provided, the mechanical stability of the membrane is established without significantly affecting the selectivity. Furthermore, the structure of the porous support enables the efficient application of the coating.

It has been found that membranes can be provided comprising an aggregate filled coating of 25 $\mu$m or less on a porous support and that the performance of the resulting pervaporation membranes is significantly increased, compared to those described in the prior art. The inventors have found that the alcohol/water flux, and more particularly the ethanol/water flux through the membranes is significantly increased without significantly affecting the selectivity of the membrane.

The inventors have found that a reduction of the average coating thickness, thereby providing that the coating has a maximal average thickness of 20 $\mu$m, or a coating with a maximal average thickness of 20 $\mu$m, 19 $\mu$m, 18 $\mu$m, 17 $\mu$m, 16 $\mu$m, 15 $\mu$m, 14 $\mu$m, 13 $\mu$m, 12 $\mu$m, 11 $\mu$m, 10 $\mu$m, 9 $\mu$m, 8 $\mu$m, 7 $\mu$m, 6 $\mu$m, 5 $\mu$m, 4 $\mu$m, 3 $\mu$m, 2 $\mu$m, 1 $\mu$m or 0.5 $\mu$m, provides pervaporation membranes that show a high selectivity, combined with an elevated pervaporation flux. The pervaporation flux has been found to decrease severely when the average thickness of the coating increases with only a few micrometers, hence having a major negative effect on the performance of the pervaporation membrane. A small increase of the average coating thickness to about 30 $\mu$m shows a reduction of the pervaporation flux with 25% or more compared to the pervaporation flux of the membranes according to the present invention. By providing pervaporation membranes comprising e.g. a silica filled poly(1-trimethylsilyl-1-propyne) coating on top of a porous support, wherein the average thickness of said coating is at most 20 $\mu$m, the inventors have found that the pervaporation flux through the membrane increases significantly and more than what would be expected.

The term "pervaporation" as used in the present application refers to a method for the separation of mixtures of liquids by partial vaporization through a non-porous membrane. This membrane-based process comprises two basic steps, firstly the permeation of the permeant through the membrane, followed by their evaporation into the vapor phase. This process is used by a number of industries for different processes, including purification and analysis processes.

The pervaporation membrane therefore acts as a selective barrier between two phases, the liquid phase feed and the vapor phase permeate. It allows the desired component(s) of the liquid feed to be transferred through the membrane by vaporization. Separation of components is based on a difference in transport rate of individual components through the membrane. Typically, the upstream side of the membrane is at ambient pressure and the downstream side is under vacuum or swept with an inert gas to allow the evaporation of the selective component after permeation through the membrane. Driving force for the separation is the difference in the partial pressures of the components on the two sides and not the volatility difference of the components in the feed.

The separation of components (e.g. water and a solvent such as an alcohol) is based on a difference in transport rate of individual components through the membrane. This transport mechanism can be described using the solution-diffusion model, based on the rate/ degree of dissolution of a component into the membrane and its velocity of transport (expressed in terms of diffusivity) through the membrane, which will be different for each unique feed component or membrane material couple.

Pervaporation is used on an industrial scale to separate solvents such as ethanol from its dilute aqueous solutions. One of the applications wherein ethanol/water separation is the key factor is the production of bio-ethanol. Bio-ethanol can be produced from the fermentation of sugar by enzymes produced from specific varieties of yeast. In order for the ethanol not to negatively influence the fermentation process (product inhibition of microorganisms), the alcohol produced should be continuously removed from the reaction mixture. This can be performed by conventional techniques, such as distillation and solvent extraction, but these processes are very energy consuming as the aqueous solutions usually only contain very low solvent concentrations. Pervaporation with ethanol-selective membranes allows to separate low-concentration bio-ethanol from fermentation broths in an economically effective way. Pervaporation is a process which is commonly used for the separation of diluted aqueous mixtures containing organic solvents, such as alcohols including ethanol, butanol, etc.

The present invention therefore relates to a novel pervaporation membrane provided with an aggregate filled PTMSP coating on a porous support, wherein the average thickness of said coating is at most 20 $\mu$m. In particular embodiments, the average thickness of said aggregate filled coating is larger than 250 nm and smaller than 20 $\mu$m, 19 $\mu$m, 18 $\mu$m, 17 $\mu$m, 16 $\mu$m, 15 $\mu$m, 14 $\mu$m, 13 $\mu$m, 12 $\mu$m, 11 $\mu$m, 10 $\mu$m, 9 $\mu$m, 8 $\mu$m, 7 $\mu$m, 6 $\mu$m, 5 $\mu$m, 4 $\mu$m, 3 $\mu$m, 2 $\mu$m, 1 $\mu$m or 0.5 $\mu$m.

The inventors have found that the application of an aggregate filled PTMSP coating or a coating of PTMSP comprising aggregates of nanoparticles, and preferably a silica filled PTMSP or PTMSP-silica coating, with an average thickness smaller than 20 $\mu$m onto a porous support, provides a pervaporation membrane with enhanced properties. The pervaporation membranes of the present invention show a high selectivity, combined with an elevated pervaporation flux.

It should be noted that a skilled person will appreciate that the aggregate filled PTMSP coating on the porous support can more generally be described as a coating comprising a, preferably non-porous, material in the form of nanoparticles such as silica, metal oxides and/or aggregates thereof, in combination with a glassy polymer. The nanoparticles preferably have a high specific surface area. The nanoparticles can be treated or coated, e.g. to make them hydrophobic. The glassy polymer refers to a polymer having a glass transition temperature above the temperature at which the polymer will be used. The glassy polymers used for the present invention have a glass transition temperature of at least 100°C. The glassy polymers preferably have a high free volume, meaning a fractional free volume of at least 0.20. Possible glassy polymers envisaged by the invention are substituted polyacetylene polymers, chosen from, but not limited to, PTMSP, PTBA, PPP, PTMSDPA, PTMGP and/or PMP. Preferably the glassy polymers used in the pervaporation membranes according to the present invention are substituted polyacetylene polymers and more preferably PTMSP. Other types of nanoparticle fillers may include metal organic frameworks, silsesquioxanes, nanozeolites and/or carbon nanotubes.

Preferably the pervaporation membrane according to the present invention comprises a polyacrylonitril (PAN) or polyvinylidene fluoride (PVDF) porous support. PAN is obtained through the polymerization of acrylonitril. PAN thereby forms long linear molecules in the form of for instance fibers or sheets. PVDF refers to a highly non-reactive and pure thermoplastic fluoropolymer. PVDF is a specialty plastic material in the fluoropolymer family, generally used in applications requiring high purity, strength, and resistance to solvents, acids, bases and heat.

The inventors have found that the application of the coating onto a PAN or PVDF porous support provides mechanical stability for the pervaporation membrane without affecting the selectivity significantly. Furthermore, the pervaporation flux through the membrane has been increased.

In a particular embodiment, the present invention relates to a pervaporation membrane according to the present invention comprising a PAN porous support with a PTMSP-aggregate filled coating, wherein the average thickness of said coating ranges between 2 and 20 $\mu$m, and for instance between between 15 and 20 $\mu$m, between 17 and 20 $\mu$m and for instance about 20 $\mu$m. In particular embodiments, the average thickness of said aggregate filled PTMSP coating on said PAN porous support is larger than 250 nm and smaller than 20 $\mu$m, 19 $\mu$m, 18 $\mu$m, 17 $\mu$m, 16 $\mu$m, 15 $\mu$m, 14 $\mu$m, 13 $\mu$m, 12 $\mu$m, 11 $\mu$m, 10 $\mu$m, 9 $\mu$m, 8 $\mu$m, 7 $\mu$m, 6 $\mu$m, 5 $\mu$m, 4 $\mu$m, 3 $\mu$m, 2 $\mu$m, 1 $\mu$m or 0.5 $\mu$m.

In a more particular embodiment, the present invention relates to a pervaporation membrane according to the present invention comprising a polyvinylidene fluoride (PVDF) porous support with a aggregate filled PTMSP coating, wherein the average thickness of said coating ranges preferably between 0.5 and 20 $\mu$m, between 2.5 and 20 $\mu$m, for instance between 5 and 15 $\mu$m, between 6 and 12 $\mu$m or between 5 and 9 $\mu$m. In particular embodiments the average thickness of said PTMSP aggregate filled coating on said PVDF porous support is larger than 250 nm and smaller than 20 $\mu$m, 19 $\mu$m, 18 $\mu$m, 17 $\mu$m, 16 $\mu$m, 15 $\mu$m, 14 $\mu$m, 13 $\mu$m, 12 $\mu$m, 11 $\mu$m, 10 $\mu$m, 9 $\mu$m, 8 $\mu$m, 7 $\mu$m, 6 $\mu$m, 5 $\mu$m, 4 $\mu$m, 3 $\mu$m, 2 $\mu$m, 1 $\mu$m or 0.5 $\mu$m.

It should be noted that a skilled person will appreciate that the average thickness of said coating refers to the average thickness of the layer on top of the porous support. A skilled person will further appreciate that while conducting the coating process, part of the coating material will infiltrate the porous support thereby providing a deposition of the coating material in the porous support.

By using pervaporation membranes comprising a porous support in combination with a coating having an average thickness as provided here above, the inventors have found that the pervaporation flux increases significantly without any loss in selectivity. Furthermore, the specific properties of PVDF (highly non-reactive, high purity and strength, and resistance to solvents, acids, bases and heat) provide the pervaporation membranes according to the present invention with a long-term stability and high resistance in organic solvents. This is especially useful since the pervaporation membranes according to the present invention are especially useful in the treatment of liquid streams containing organic solvents.

In particular embodiments, the membranes according to the invention are at least partially water saturated. More particularly the pervaporation membrane according to the present invention comprises a polyvinylidene fluoride (PVDF) porous support wherein the water saturation of said porous support upon coating is at least 50%, at least 60%, at least 70%, at least 80%, at least 85%, at least 90% or at least 95%.

The inventors have additionally found that the water saturation of the, preferably PVDF, porous support plays an important role in the pervaporation flux through the membrane. An increasing water saturation of the, preferably PVDF, porous support has been shown to increase the pervaporation flux through the membrane. Compared to a dry PVDF porous support, a PVDF porous support with an elevated water saturation has shown an increase in the pervaporation flux with at least 20%, preferably at least 30%, more preferably at least 40% and most preferably at least 50%.

The water saturation, as used herein, can be defined as the degree of saturation of the porous support. The degree of saturation ($S_W$) may be defined as:

$$S_W = \frac{V_W}{V_V} = \frac{V_W}{V_T \phi} = \frac{\theta}{\phi}$$

Wherein $\Phi$ refers to the porosity of the material, $V_V$ the volume of the pore space, $V_W$ the water volume, $V_T$ the total volume of the material and $\theta$ the volumetric water content. The values for the degree of saturation can range from 0 (dry) to 1 (saturated).

In alternative embodiments, the membranes according to the invention are not water saturated.

According to the present invention the glassy coating, more particularly the PTMSP coating is filled with an aggregate. This implies that the dense coating, preferable consisting of a high free volume polymer, comprises particles, more particularly nanoparticles which are non-porous and which are present as an aggregate, i.e. the particles interact as a result of van der Waals forces or chemical bonding. In particular embodiments, the particles are silica or other non-porous inorganic particles such as metal oxides.

In a particular embodiment the membranes according to the invention preferably comprise between 0.01 wt% and 90 wt% non-porous particles, more preferably between 0.01 wt% and 60 wt% non-porous particles, even more preferably between 0.01 wt% and 50 wt%, between 0.01 wt% and 40 wt%, between 0.01 wt% and 30 wt%, between 0.01 wt% and 20 wt% or between 0.01 wt% and 10 wt% non-porous particles. The membranes according to the invention can comprise between 70 wt% and 90 wt% non-porous particles. The membranes of the invention preferably comprise between 0.003 vol% and 75 vol%, between 0.01 wt% and 50 wt% non-porous particles. The wt% provided herein is based on the amount of dry substance.

According to particular embodiments, the aggregate filled coating is obtained by the method described by De Sitter et al. (Journal of Membrane Science vol. 278 (2006), pp. 83-91, incorporated herein by reference). Briefly, the method of manufacturing the membrane is a three-step solvent casting procedure. First, the silica is dispersed in toluene by 30 minutes ultrasonic and 3 hours magnetic stirring. Secondly, the PTMSP is dissolved in the silica/toluene dispersion and finally, the solution is cast on a glass plate and dried. By that method, membranes are obtained comprising aggregates of silica.

It has been observed that in these embodiments, the particle aggregates in the polymer matrix comprise interstitial nanometre-sized cavities, the average size of which increases with increasing filler content. The aggregate filled coating provides an increased permeability compared to pure (non-filled) PTMSP membranes, the permeability increasing with increasing filler content.

In particular embodiments the filler particles are arranged in aggregates having an average aggregate size of at least 50 nm and smaller than 350 nm, and preferably smaller than 200 nm. The size distribution of the aggregates can have a standard deviation smaller than or equal to 300 nm, preferably smaller than or equal to 250 nm, preferably smaller than or equal to 200 nm, preferably smaller than or equal to 150 nm, preferably smaller than or equal to 100 nm and more preferably smaller than 50 nm. This means that the aggregate size is preferably so distributed to have standard deviations as indicated. Average aggregate sizes and standard deviations are based on number distribution. Aggregate size distributions in the membranes according to the invention are preferably those falling in the range as indicated in Table 1, more preferably those falling in the range as indicated in Table 2.

Table 1. Preferable aggregate size distribution in the membranes according to the invention.

| Aggregrate size (nm) | Size occurrence (%) |
| --- | --- |
| < 100 | 10 - 40 |
| 100 - 200 | 20 - 75 |
| > 200 | 10 - 49 |

Table 2. More preferable aggregate size distribution in the membranes according to the invention.

| Aggregrate size (nm) | Size occurrence (%) |
| --- | --- |
| < 100 | 10 - 40 |
| 100 - 200 | 20 - 75 |
| 200 - 300 | 10 - 25 |
| > 300 | 0 - 24 |

A well-defined aggregate size distribution leads to a product with a uniform and repeatable performance. Indeed, aggregates that are too large can form interstitial cavities that are too large, which negatively affects the selectivity of a membrane. Therefore, in most cases the aggregate size is preferably selected such that an optimal balance is obtained between permeability and selectivity of the membrane.

In a particular embodiment, the membranes comprise a silica filled PTMSP coating. As used herein the silica filled PTMSP coating refers to coating material comprising silica and PTMSP. More preferably the coating is the result of the application of a coating solution onto the porous support, as is detailed below. In more particular embodiments, said coating solution comprises between 0.1 and 50 wt% silica, between 0.1 and 5 wt% PTMSP dissolved in a solvent. Said solvent is preferably toluene, hexane, benzene, diethyl ether, chloroform, ethyl acetate or a combination or mixture thereof, and preferably toluene. Preferably said coating solution comprises 0.5 to 2.5 wt% silica, 0.5 to 2.5 wt% PTMSP and 95 to 99 wt% solvent, more preferably 1 to 2 wt% silica, 1 to 2 wt% PTMSP and 96 to 98 wt% solvent. Most preferably said coating solution comprises 1.5 wt% silica, 1.5 wt% PTMSP and 97 wt% solvent.

As detailed above, the membranes according to the present invention have properties which are of particular interest, more particularly a high flux rate and a high selectivity.

In a more particular embodiment of the present invention, the pervaporation membrane according to the present invention provides an (ethanol/water) pervaporation flux (measured for a 10/90 (v/v)% ethanol/water mixture at a temperature of about 50°C) of at least 2.0 kg/(m$^2$.h), and preferably at least 2.1, 2.2, 2.3, 2.4 or 2.5 kg/(m$^2$.h). More preferably the (ethanol/water) pervaporation flux of the pervaporation membranes according to the present invention are at least 2.6, 2.7, 2.8, 2.9, 3.0, 3.1, 3.2, 3.3, 3.4, 3.5, 3.6 , 3.7, 3.8, 3.9, 4.0, 4.5, 5.0, 5.5 or 6.0 kg/(m$^2$.h), or more.

As used herein the amount of transport of compounds per unit area and per unit time through the membrane is defined as the pervaporation flux. The pervaporation flux may be gravimetrically determined and calculated according to equation:

$$J = \frac{m}{A.t}$$

where, m denotes the weight of permeated liquid per unit membrane area A and filtration time t.

In a more particular embodiment of the present invention, the pervaporation membrane according to the present invention provides a (ethanol/water) separation factor $\alpha$ (EtOH/H$_2$O) of at least 8, more particularly at least 9, most particularly at least 10 and even more particularly at least 15, at least 20 or at least 25. Said separation factor is a parameter characterizing the selectivity of the pervaporation membrane. The separation factor can be calculated according to equation:

$$\alpha = \frac{Y_{EtOH}}{Y_{H_2O}} \cdot \frac{X_{H_2O}}{X_{EtOH}}$$

in which X and Y represent weight fractions in the retentate and permeate, respectively.

Furthermore, the pervaporation membrane according to the present invention provides a pervaporation separation index (PSI) of at least 20 kg/(m$^2$.h), preferably at least 24 kg/(m$^2$.h), more preferably at least 30 kg/(m$^2$.h) and most preferably at least 35 kg/(m$^2$.h). The pervaporation separation index (PSI) is a general parameter combining the pervaporation flux and the separation factor in a single parameter. The pervaporation separation index (PSI) can be calculated using equation:

$$PSI = J.(\alpha - 1)$$

A person skilled in the art may note that the PSI is zero when the separation factors equals unity. In that specific case no separation occurs.

In a more particular embodiment, the present invention relates to a pervaporation membrane wherein said pervaporation membrane comprises an additional support. Said additional support is preferably a woven or non-woven tissue made of a material chosen from, but not limited to, polyester, polyethylene, polypropylene, and/or combinations thereof.

A further aspect of the present invention relates to methods for the manufacturing of a pervaporation membrane, wherein preferably the methods comprises the steps of:

(a) coating a porous support with a PTMSP solution comprising aggregated nanoparticles; and,

(b) evaporating said aggregate filled PTMSP solution on said porous support for at least 8 hours at a temperature ranging between 20 and 75°C, thereby providing a pervaporation membrane provided with an aggregate filled PTMSP coating onto said porous support.

The coating of said porous support with said aggregate filled PTMSP solution, and preferably a PTMSP-silica solution, may occur through coating techniques known in the art such as, but not limited to, dipping, painting, spraying, dabbing or pouring the coating solution onto the porous support.

In order to provide a thin coating with the required characteristics it is essential for the evaporation of the coating solution to occur in a gradual and controlled manner. If the coating solution is dried in a rapid manner the inventors have found that the coating thickness is highly irregular and does not provide the pervaporation membranes according to the present invention with the required characteristics. The evaporation of the coating solution preferably occurs at a temperature between 20 and 75°C, preferably a temperature between 20 and 55°C ambient temperature, more preferably a temperature between 20 and 40°C and even more preferably at an ambient temperature and preferably a temperature between 20 and 25°C for a period of at least 8 hours, preferably at least 12 hours and more preferably at least 20 hours and preferably for at least 24 hours.

The aggregate filled PTMSP solution used in the methods according to the invention in specific embodiments refers to a PTMSP-silica solution comprising between 0.1 and 50 wt% silica, between 0.1 and 5 wt% PTMSP dissolved in a solvent wherein said solvent is preferably toluene, hexane, benzene, diethyl ether, chloroform, ethyl acetate or a combination or mixture thereof, and preferably toluene. Preferably said PTMSP-silica solution comprises 0.5 to 2.5 wt% silica, 0.5 to 2.5 wt% PTMSP and 95 to 99 wt% solvent, more preferably 1 to 2 wt% silica, 1 to 2 wt% PTMSP and 96 to 98 wt% solvent. Preferably the PTMSP-silica solution refers to solution comprising 1.5 wt% silica, 1.5 wt% PTMSP and 97 wt% solvent. It should further be noted that the ratio of silica versus PTMSP ranges between 2:1 and 1:2 and preferably the ratio is 1:1. The evaporation of the PTMSP-silica solution may occur using evaporation techniques well known in the art and preferably evaporating for at least 24 hours under ambient conditions and preferably at 22°C.

The method according to the present invention may further comprise a step wherein the pervaporation membrane of step (b) is thermally treated, thereby removing residual solvent. Said thermal treatment as used herein may comprise the treatment of the pervaporation membrane of step (b) for at least 1 hour at a temperature of at least 65°C, and more preferably at a temperature ranging between 65°C and 75°C.

More particularly, the method of the present invention deposits a PTMSP-silica coating onto a porous support, wherein the average thickness of said coating is at most 20 $\mu$m. Preferably in case said coating is deposited onto a PAN porous support, the average thickness of the coating ranges between 2 and 20 $\mu$m, and for instance between 15 and 20 $\mu$m, between 17 and 20 $\mu$m or about 20 $\mu$m. Preferably in case said coating is deposited onto a PVDF porous support, the average thickness of said coating ranges preferably between 0.5 and 20 $\mu$m, more particularly less than 15 $\mu$m, less than 12 $\mu$m, most particularly less than 9$\mu$m or even less than 5$\mu$m.

A further aspect of the present invention relates to tools such as an apparatus, for separating a mixture of components by pervaporation or nanofiltration, which comprise the pervaporation membrane according to the present invention. The pervaporation membranes according to the present invention can find application in apparatuses for separating a mixture of components by pervaporation or nanofiltration. The pervaporation membranes according to the present invention can advantageously be used in processes for separating a mixture of (fluid) components.

Yet a further aspect of the present invention relates to the use of a pervaporation membrane according to the present invention in a process of separating a mixture of components by pervaporation or nanofiltration.

More preferably the use of a pervaporation membrane according to the present invention in a process of separating a mixture of water and an alcohol components, preferably into in an alcohol-rich fraction and an alcohol-poor fraction, by pervaporation or nanofiltration. Said alcohols may for instance be chosen from methanol, ethanol, n-propanol, isopropanol, n-butanol, isobutanol, 2-butanol and/or tert-butanol.

The pervaporation membranes according to the present invention are also frequently used in OPV processes wherein organic components such as bioproducts including bio-alcohols, are separated from a diluted aqueous liquid such as a fermentation broth. Also for the isolation and purification of aroma compounds such as odours and fragrances the pervaporation membranes according to the present invention may be used.

Additional applications include organic solvent nanofiltration wherein small dissolved organic compounds are separated from organic solvents. Typical uses include solvent recovery, concentration, isolation and purification of small molecules and the recovery and re-use of (homogeneous) catalysts.

The processes wherein the pervaporation membranes according to the present invention are used have shown to provide a highly-efficient alternative for other separation techniques known in the art such as distillation. The pervaporation membranes according to the present invention further provide a mild, non-destructive separation technique enabling the separation of azeotropes, close-boiling and/or thermosensitive liquid mixtures. The pervaporation membranes are furthermore easily scalable and integratable in complex processing systems. The pervaporation membranes are also stable in a wide range of solvent environments and additionally show an improved performance compared to commercially available membranes.

## EXAMPLES

### EXAMPLE 1 - Example showing the characteristics of the thin film PTMSP membranes

The present example provides a comparison of the membranes according to the present invention with commercial available membranes.

The membranes according to the present invention use a porous support prepared from polyacrylonitrile (PAN) or polyvinylidene fluoride (PVDF) and are covered with a thin, selective top layer prepared from polv(1-trimethylsilyl-1-propyne) (PTMSP) and hydrophobic silica. The commercial membranes used in the present example are PERVAP 4060 and Pervatech PDMS.

Casting solutions containing 15 wt% PAN or PVDF in N-methylpyrrolidinone (NMP) were prepared and magnetically stirred until complete dissolution. The homogeneous solutions were then cast on a polyester fabric using an automatic film applicator. Immediately after casting, the nascent polymer films were immersed in a distilled water bath at room temperature where demixing and solidification took place. After 30 minutes, the membranes were removed from the coagulation bath and gently boiled for 1 hour in distilled water. Subsequently, the membranes were cooled down to room temperature and stored in an aqueous formaldehyde solution (1 wt%) to inhibit pore collapse and microbial growth.

Thin PTMSP-silica films were either applied on a dry support, or on a support saturated with the aqueous formaldehyde solution. In the latter case only the surface moisture was removed by gently patting the surface with absorbing tissue paper. Dry support membranes, on the other hand, were obtained by vacuum-drying for 1 hour at 60°C. Thin film composite membranes were prepared by coating a PTMSP-silica solution on the PAN or PVDF support. This coating solution, consisting of 1.5 wt% PTMSP, 1.5 wt% silica and 97 wt% toluene, was prepared by adding the hydrophobic silica to toluene at a concentration of 1.5 wt%, after which the dispersion was ultrasonically treated for 30 minutes and then magnetically stirred for 3 hours. To this dispersion, 1.5 wt% of PTMSP was added and the polymer-silica suspension was magnetically stirred for 4 days until complete dissolution of the polymer. After application, the coating was evaporated for 24 hours in ambient air (22°C), and the resulting thin film membrane was thermally treated for 1 hour at 70°C in a vacuum oven to remove the residual toluene. The final vacuum-dried membrane sheets were stored under dry conditions.

Scanning electron microscopy (SEM) combined with ImageJ image analysis software was used to determine the surface porosity of the support. A JEOL cold field emission scanning electron microscope (FEGSEM) type JSM6340F, was used to observe membrane surfaces and cross-sections

Pervaporation measurements were carried out on a laboratory-developed pervaporation system wherein two Amafilter test cells with an effective membrane area of 3.7 cm$^2$ were used. The feed was circulated with a centrifugal pump and kept at a constant temperature using an immersion heating circulator with microprocessor control. Heating elements were placed on top of the permeate vessels to prevent the pipelines from freezing. A medium vacuum was maintained at the permeate side with a rotary vane vacuum pump. The membranes were placed into the test cells, after which a 10 wt% aqueous ethanol feed mixture was circulated over the membranes at about 12 L/h. The feed was kept at 50°C and the vapor-side pressure maintained at about 0.04 mbar. The permeate was condensed in a stainless steel vessel immersed in a cooling cylinder filled with liquid nitrogen. After the initial non-equilibrium conditions during which the permeate was discarded, a sample was collected. Feed, concentrate and permeate samples were analyzed for water on a semiautomatic, volumetric Karl-Fisher titrator. The pervaporation flux was gravimetrically determined and calculated according to equation:

$$J = \frac{m}{A.t}$$

where, m denotes the weight of permeated liquid per unit membrane area A and filtration time t.

The separation factor $\alpha$ (EtOH/H$_2$O) was calculated according to equation:

$$\alpha = \frac{Y_{EtOH}}{Y_{H_2O}} \cdot \frac{X_{H_2O}}{X_{EtOH}}$$

in which X and Y represent weight fractions in the retentate and permeate, respectively. To summarize pervaporation flux and separation factor in one composite figure of merit, the pervaporation separation index (PSI) was calculated using equation:

$$PSI = J(\alpha - 1)$$

Note that the PSI is zero when the separation factors equals unity, since no separation occurs.

All reported fluxes and selectivities are average values based on eight PV measurements on circular coupons cut from two membrane sheets (4 coupons each). Flux and selectivity values displayed a variance of less than 8%.

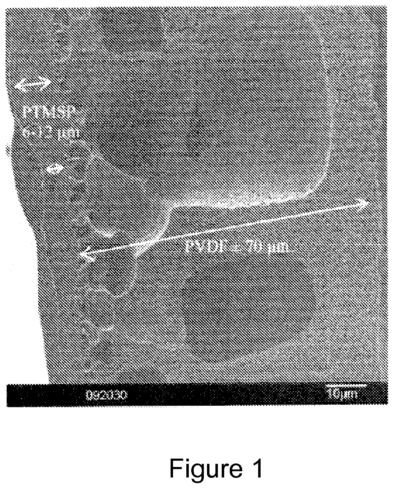

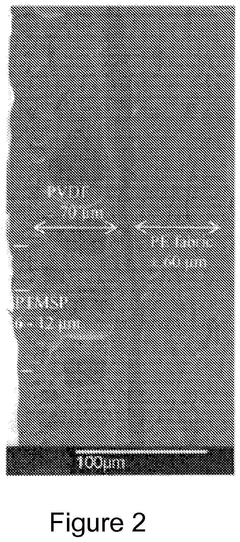

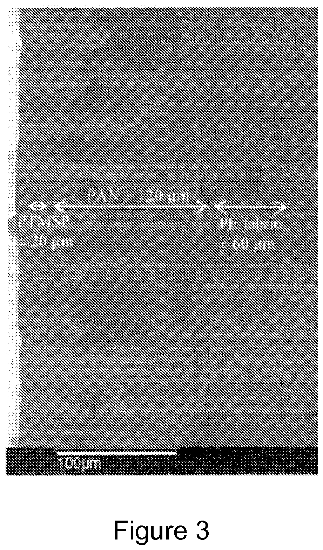

Figures 1, 2 and 3 show SEM images of cross-sections of thin film PTMSP pervaporation membranes according to the present invention. Figures 1 and 2 show a thin PTMSP-silica film coated on a PVDF support layer. The average coating thickness ranges between 6 and 12 $\mu$m. Figure 3 shows a thin PTMSP-silica film coated on a PAN support layer. The average coating thickness is about 20 $\mu$m. In table 1, the characteristics of the pervaporation membranes according to the present invention are compared to two commercial PDMS-based membranes, PERVAP 4060 and Pervatech.

Table 1: Performance of thin film PTMSP-silica pervaporation membranes and commercial OPV membranes in the separation of a 10/90 (v/v)% ethanol/water mixture.

| Support | Thickness coating | Flux | $\alpha$ (EtOH/H$_2$O) | PSI (kg/m$^2$.h) |
|---|---|---|---|---|
| PAN (dried) | $\pm$ 20 $\mu$m | 2.7 kg/(m$^2$.h) | 11 | 27 |
| PVDF (dried) | $\pm$ 6 to 12 $\mu$m | 2.5 kg/(m$^2$.h) | 11 | 25 |
| PVDF (water saturated) | $\pm$ 6 to 12 $\mu$m | 3.7 kg/(m$^2$.h) | 12 | 41 |
| PERVAP 4060 | $\pm$ 2 $\mu$m | 1.9 kg/(m$^2$.h) | 7 | 11 |
| Pervatech | $\pm$ 2 $\mu$m | 3.3 kg/(m$^2$.h) | 6 | 15 |

Thin film PTMSP-silica membranes were successfully prepared and applied in pervaporation of ethanol/water mixtures. Characterization of the membranes showed ethanol/water separation factors (represented as $\alpha$ (EtOH/H2O) in Table 1) around 12 and fluxes up to 3.7 kg/(m$^2$.h), establishing a 5 to 8 fold flux rise as compared to dense PTMSP-silica membranes (data not shown). Compared to commercial available membranes the membranes according to the present invention are shown to be beneficial both in terms of ethanol selectivity and flux. PV results suggest the use of a water-saturated PVDF support since permeate fluxes can be increased by 48% at unaltered selectivity's. Due to their attractive flux-selectivity combination, the PTMSP-silica thin film membranes clearly have potential in the removal of alcohols from aqueous streams.

## Claims

1.  A pervaporation membrane comprising an aggregate filled poly(1-trimethylsilyl-1-propyne) (PTMSP) coating on a porous support, said aggregate-filled poly(1-trimethylsilyl-1-propyne) coating being a coating of poly(1-trimethylsilyl-1-propyne) comprising non-porous nanoparticles which are present as an aggregate, wherein said aggregates have an average aggregate size of at least 50 nm and smaller than 200 nm, **characterized in that** the average thickness of said coating is between 250 nm and 20 $\mu$m, and **in that** the (ethanol/water) pervaporation flux through the membrane is at least 2.0 kg/(m$^2$.h), and the (ethanol/water) separation factor of the pervaporation membrane is at least 7.

2.  Pervaporation membrane according to claim 1 wherein the ratio of aggregate versus poly(1-trimethylsilyl-1-propyne) ranges between 2:1 and 1:2.

3.  Pervaporation membrane according to claim 1 or 2, wherein said porous support is a porous polyacrylonitrile or polyvinylidene fluoride membrane.

4.  Pervaporation membrane according to claim 3, wherein said porous support is a porous polyacrylonitrile membrane and the average thickness of said aggregate filled poly(1-trimethylsilyl-1-propyne) coating ranges between 2 $\mu$m and 20 $\mu$m.

5.  Pervaporation membrane according to claim 3, wherein said porous support is polyvinylidene fluoride and the average thickness of said aggregate filled poly(1-trimethylsilyl-1-propyne) coating ranges between 0.5 $\mu$m and 20 $\mu$m.

6.  Pervaporation membrane according to any one of claims 1 to 5, wherein said aggregate is an aggregate of particles of silica or a metal oxide.

7.  Pervaporation membrane according to any of claims 1 to 6, wherein said membrane is **characterized by** the following features:

- the (ethanol/water) pervaporation flux through the membrane is at least 2.5 kg/(m$^2$.h) and
- the (ethanol/water) separation factor of the pervaporation membrane is at least 10.

8. Pervaporation membrane according to any of claims 1 to 7, wherein said pervaporation membrane comprises an additional support.

9. A method for the manufacturing of a pervaporation membrane according to any one of claims 1 to 8, said method comprising the steps of coating a porous support with an aggregate-filled PTMSP solution such that the average thickness of said coating after drying is between 250 nm and 20 $\mu$m, wherein said aggregate-filled PTMSP solutions comprises non-porous nanoparticles which are present as an aggregate, wherein said aggregates have an average aggregate size of at least 50 nm and smaller than 200 nm.

10. An apparatus for separating a mixture of components by pervaporation, the apparatus comprising the pervaporation membrane according to any of claims 1 to 8.

11. Use of a pervaporation membrane according to any of claims 1 to 8 in a process of separating a mixture of components by pervaporation.

12. The use according to claim 11, wherein said mixture of components is a mixture of water and an alcohol and wherein in said process the mixture of components is separated in an alcohol-rich fraction and an alcohol-poor fraction.


## Patentansprüche

1. Pervaporationsmembran, die eine aggregatgefüllte Poly(1-trimetylsilyl-1-propyn)-(PTMSP-)Beschichtung auf einem porösen Träger umfasst, wobei die aggregatgefüllte Poly(1-trimetylsilyl-1-propyn)-Beschichtung eine Beschichtung von Poly(1-trimethylsilyl-1-propyn) ist, die nichtporöse Nanopartikel umfasst, die als Aggregat vorhanden sind, wobei die Aggregate eine durchschnittliche Aggregatgröße von zumindest 50 nm und weniger als 200 nm aufweisen, **dadurch gekennzeichnet, dass** die durchschnittliche Dicke der Beschichtung zwischen 250 nm und 20 $\mu$m beträgt, und dass
der (Ethanol/Wasser)-Pervaporationsfluss durch die Membran zumindest 2,0 kg/(m$^2$.h) beträgt und der (Ethanol/Wasser)-Trennungsfaktor der Pervaporationsmembran zumindest 7 ist.

2. Pervaporationsmembran nach Anspruch 1, wobei das Verhältnis von Aggregat zu Poly(1-trimetylsilyl-1-propyn) im Bereich zwischen 2:1 und 1:2 liegt.

3. Pervaporationsmembran nach Anspruch 1 oder 2, wobei der poröse Träger eine poröse Polyacrylonitril- oder Polyvinylidenfluoridmembran ist.

4. Pervaporationsmembran nach Anspruch 3, wobei der poröse Träger eine poröse Polyacrylonitrilmembran ist und die durchschnittliche Dicke der aggregatgefüllten Poly(1-trimetylsilyl-1-propyn)-Beschichtung im Bereich zwischen 2 $\mu$m und 20 $\mu$m liegt.

5. Pervaporationsmembran nach Anspruch 3, wobei der poröse Träger Polyvinylidenfluorid ist und die durchschnittliche Dicke der aggregatgefüllten Poly(1-trimetylsilyl-1-propyn)-Beschichtung im Bereich zwischen 0,5 $\mu$m und 20 $\mu$m liegt.

6. Pervaporationsmembran nach einem der Ansprüche 1 bis 5, wobei das Aggregat ein Aggregat von Partikeln von Siliciumdioxid oder eines Metalloxids ist.

7. Pervaporationsmembran nach einem der Ansprüche 1 bis 6, wobei die Membran durch die folgenden Merkmale gekennzeichnet ist:

- der (Ethanol/Wasser)-Pervaporationsfluss durch die Membran beträgt zumindest 2,5 kg/(m$^2$.h), und
- der (Ethanol/Wasser)-Trennungsfaktor der Pervaporationsmembran ist zumindest 10.

8. Pervaporationsmembran nach einem der Ansprüche 1 bis 7, wobei die Pervaporationsmembran einen zusätzlichen Träger umfasst.

9. Verfahren zum Herstellen einer Pervaporationsmembran nach einem der Ansprüche 1 bis 8, wobei das Verfahren die Schritte des Beschichtens eines porösen Trägers mit einer aggregatgefüllten PTMSP-Lösung umfasst, so dass die durchschnittliche Dicke der Beschichtung nach dem Trocknen zwischen 250 nm und 20 μm liegt, wobei die aggregatgefüllten PTMSP-Lösungen nichtporöse Nanopartikel umfassen, die als Aggregat vorhanden sind, wobei die Aggregate eine durchschnittliche Aggregatgröße von zumindest 50 nm und weniger als 200 nm aufweisen.

10. Vorrichtung zum Trennen einer Mischung von Komponenten durch Pervaporation, wobei die Vorrichtung die Pervaporationsmembran nach einem der Ansprüche 1 bis 8 umfasst.

11. Verwendung einer Pervaporationsmembran nach einem der Ansprüche 1 bis 8 in einem Prozess zum Trennen einer Mischung von Komponenten durch Pervaporation.

12. Verwendung nach Anspruch 11, wobei die Mischung von Komponenten eine Mischung von Wasser und eines Alkohols ist und wobei die Mischung von Komponenten in dem Prozess in eine alkoholreiche Fraktion und eine alkoholarme Fraktion getrennt wird.

**Revendications**

1. Membrane de pervaporation comprenant un revêtement de poly(1-triméthylsilyl-1-propyne) (PTMSP) chargé d'agrégat sur un support poreux, ledit revêtement de poly(1-triméthylsilyl-1-propyne) chargé d'agrégat étant un revêtement de poly(1-triméthylsilyl-1-propyne) comprenant des nanoparticules non poreuses qui sont présentes sous la forme d'un agrégat, dans laquelle lesdits agrégats ont une taille d'agrégat moyenne d'au moins 50 nm et inférieure à 200 nm, **caractérisée en ce que** l'épaisseur moyenne dudit revêtement est comprise entre 250 nm et 20 μm, et **en ce que** le flux de pervaporation (éthanol/eau) à travers la membrane est d'au moins 2,0 kg/(m$^2$.h), et le facteur de séparation (éthanol/eau) de la membrane de pervaporation est d'au moins 7.

2. Membrane de pervaporation selon la revendication 1, dans laquelle le rapport de l'agrégat au poly(1-triméthylsilyl-1-propyne) est situé dans la plage comprise entre 2/1 et 1/2.

3. Membrane de pervaporation selon la revendication 1 ou 2, dans laquelle ledit support poreux est une membrane poreuse de polyacrylonitrile ou de poly(fluorure de vinylidène).

4. Membrane de pervaporation selon la revendication 3, dans laquelle ledit support poreux est une membrane poreuse de polyacrylonitrile et l'épaisseur moyenne dudit revêtement de poly(1-triméthylsilyl-1-propyne) chargé d'agrégat est située dans la plage comprise entre 2 μm et 20 μm.

5. Membrane de pervaporation selon la revendication 3, dans laquelle ledit support poreux est du poly(fluorure de vinylidène) et l'épaisseur moyenne dudit revêtement de poly(1-triméthylsilyl-1-propyne) chargé d'agrégat est située dans la plage comprise entre 0,5 μm et 20 μm.

6. Membrane de pervaporation selon l'une quelconque des revendications 1 à 5, dans laquelle ledit agrégat est un agrégat de particules de silice ou d'un oxyde métallique.

7. Membrane de pervaporation selon l'une quelconque des revendications 1 à 6, laquelle membrane est **caractérisée par** les caractéristiques suivantes :

   - le flux de pervaporation (éthanol/eau) à travers la membrane est d'au moins 2,5 kg/(m$^2$.h) et
   - le facteur de séparation (éthanol/eau) de la membrane de pervaporation est d'au moins 10.

8. Membrane de pervaporation selon l'une quelconque des revendications 1 à 7, laquelle membrane de pervaporation comprend un support additionnel.

9. Procédé pour la fabrication d'une membrane de pervaporation selon l'une quelconque des revendications 1 à 8, ledit procédé comprenant les étapes de revêtement d'un support poreux avec une solution de PTMSP chargé d'agrégat de façon que l'épaisseur moyenne dudit revêtement après séchage soit comprise entre 250 nm et 20 μm,

dans lequel ladite solution de PTMSP chargé d'agrégat comprend des nanoparticules non poreuses qui sont présentes sous la forme d'un agrégat, et dans lequel lesdits agrégats ont une taille d'agrégat moyenne d'au moins 50 nm et inférieure à 200 nm.

10. Dispositif pour séparer un mélange de composants par pervaporation, le dispositif comprenant la membrane de pervaporation selon l'une quelconque des revendications 1 à 8.

11. Utilisation d'une membrane de pervaporation selon l'une quelconque des revendications 1 à 8 dans un procédé de séparation d'un mélange de composants par pervaporation.

12. Utilisation selon la revendication 11, dans laquelle ledit mélange de composants est un mélange d'eau et d'un alcool et dans lequel, dans ledit procédé, le mélange de composants est séparé en une fraction riche en alcool et une fraction pauvre en alcool.

Figure 1

Figure 2

Figure 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6316684 B

- WO 2009027376 A

### Non-patent literature cited in the description

- **DE SITTER et al.** Silica filled poly(1-trimethylsilyl-1-propyne) nanocomposite membranes: relation between the transport of gases and structural characteristics. *Journal of Membrane Science,* 2006, vol. 278, 83-91

- **KOOPS et al.** Selectivity as a function of membrane thickness: gas separation and pervaporation. *Journal of Applied Polymer Science,* 1994, vol. 53, 1639-1651
- **DE SITTER et al.** *Journal of Membrane Science,* 2006, vol. 278, 83-91